(19) Europäisches Patentamt

European Patent Office

Office européen des brevets

(11) **EP 0 600 842 B1**

(12) **EUROPEAN PATENT SPECIFICATION**

(45) Date of publication and mention
of the grant of the patent:
**26.08.1998 Bulletin 1998/35**

(51) Int. Cl.⁶: $B32B\ 1/08$, $F16L\ 58/10$

(21) Application number: **93830457.3**

(22) Date of filing: **17.11.1993**

(54) **Method for applying a protective coating on carbon steel pipes**

Verfahren zum Aufbringen einer Schutzschicht auf Röhren aus Kohlenstoff-stahl

Procédé pour appliquer un revêtement protecteur sur des tubes en acier au carbone

(84) Designated Contracting States:
**DE ES FR GB**

(30) Priority: **27.11.1992 IT MI922735**

(43) Date of publication of application:
**08.06.1994 Bulletin 1994/23**

(73) Proprietor: **STAC S.r.l.**
**I-20134 Milano (IT)**

(72) Inventor:
**Marinelli, Giuseppe,**
**c/o STAC S.r.l.**
**I-20134 Milano (IT)**

(74) Representative: **Cicogna, Franco**
**Ufficio Internazionale Brevetti**
**Dott.Prof. Franco Cicogna**
**Via Visconti di Modrone, 14/A**
**20122 Milano (IT)**

(56) References cited:
**EP-A- 0 132 219**  **EP-A- 0 421 607**
**DE-A- 3 508 811**  **US-A- 4 628 080**

- **PATENT ABSTRACTS OF JAPAN vol. 13 no. 151 (C-584) ,12 April 1989 & JP-A-63 309575 (NITTO ELECTRIC IND CO LTD) 16 December 1988,**
- **DATABASE WPI Section Ch, Week 8444 Derwent Publications Ltd., London, GB; Class A32, AN 84-273887 & JP-A-59 169 852 (SUMITOMO METAL IND KK) , 25 September 1984**
- **PATENT ABSTRACTS OF JAPAN vol. 15 no. 336 (M-1151) ,26 August 1991 & JP-A-03 130130 (JAPAN STEEL & TUBE CONSTR CO) 3 June 1991,**

## Description

## BACKGROUND OF THE INVENTION

The present invention relates to a method for applying a protective coating on carbon steel pipes.

As is known, the carbon steel pipes which are used for making fluid ducts and the like (such as for conveying water, crude or refined oil, gas and the like) must be protected, on their outer surfaces, in order to prevent surface corrosion from occurring.

Since these pipes are usually provided for being embedded in the ground, the outer coating must assure an efficient and long duration protection, both because of the environment in which the pipe is installed, that is the ground, is particularly aggressive, and because the pipe, as it has been laid, can not be further inspected or monitored, and possibily repaired, unless that very expensive and complex procedures are used.

In these last years there have been designed methods and products which, as applied on new pipes, by means of proper application systems and in specialized application shops, solve in a satisfactory manner the problem of protecting against corrosion the pipes. However, each of the above mentioned methods has, in addition to a specific and very good performance, also technical or application drawbacks.

As, however, the application of these products must be performed in situ, before embedding the pipe or duct into the ground, or in order to repair an old pipe or duct, which has been temporarily put out of operation for the maintenance thereof, the above mentioned methods can not be usually applied, and the methods which can be actually applied involve great performance difficulties.

For example, in the case of use of a composition based on tar or bitumen, this material has a comparatively low cost, can be easily applied in a specialized shop including simple and unexpensive systems, a comparatively low power consume for the application, a rather good protecting power, but, on the other hand, the finished product will have poor mechanical properties, and a great low-temperature brittleness, a high plasticity, at medium-high temperatures; moreover, the application and recovery in situ are very difficult and, furthermore, great dangers to the health of the operators will occur.

By using ribbons based on synthetic polymers, the application of the protective coating can be performed at a comparatively low cost with respect to the used material, with an easy application in the shop, by means of simple systems, with a comparatively low power consume, a rather poor protective power, rather poor mechanical properties, and a comparatively easy application, but also in this case great pollution problems will occur because of the great amount of inflammable solvents contained in the adhesive primer.

In the case in which are used compositions based on polyurethane resins and tar, the protective material will have a comparatively high cost, and it can be applied in the shop in a comparatively difficult manner and requires the use of special apparatus, with a low power consume, a good protective power, mediocre or good mechanical properties, depending on the operation temperature but, on the other hand, this material will provide a poor impact resistance at low temperatures, a good resiliency at middle temperatures, a high hot-plasticity; moreover, the in situ recovering properties are vey poor, and this material, moreover, will involve great pollution problems because of the contained tar and of the isocyanates used as curing agents.

On the other hand, as there are used compositions based on liquid epoxydic resins without solvents, the protective material will have a high cost, it can be easily applied in the shop by un-expensive tools, with long storing times after its application, a very low power consume, a very good protective power, but mechanical properties from mediocre to sufficient, with problematic resiliency and impact resistance properties.

In the case of compositions in powder form or based on solid epoxydic resins, the protective coating material can be applied in the shop in a rather difficult manner, requiring the use of specially designed and expensive systems and with a very high power consume, a protective power which, while being theoretically very good, is actually rather poor, because of the fin thickness which can be obtained; moreover, the mechanical properties are good, but it is practically impossible to apply such a material in situ and perform in situ repairy operations.

By using an extruded polyethylene, one will have a protective coating material of a middle cost, a difficult application in an application shop, which requires specially designed and expensive systems, and a very high power consume, while providing a very good protecting power, good mechanical properties; on the other hand, such a material can not be practically applied in situ.

From the above it should be apparent that at present there are not available material combinations providing a satisfactory performance with respect to all of the above considered aspects.

More specifically, the compositions without solvents and based on liquid epoxydic resin are those which are most flexible from an operating standpoint, since they can be applied both in situ and in an application shop, have a good resistance against the environmental conditions within a comparatively large range (usually, with temperatures from +5°C to +40°C and with a moisture contents up to 90% and above), they do not require, for their application, complex and expensive apparatus, have very good resistance and protective power properties, and do not present dangers for the operators health, if they are used with suitable precautions.

On the other hand, they have two very great limitations: their impact resistance is very poor and, which is most important, the time between their application and a sure handling of the coated pipe (curing time) is comparatively long.

This fact decreases in a very sensible way the production yield, unless great areas are provided for allowing the coating to age and this, moreover, slackens the speed of the in situ working operations for maintenance and recovering purposes.

## SUMMARY OF THE INVENTION

Accordingly, the aim of the present invention is to overcome the above mentioned drawbacks, by providing a new method which can be used for applying a protective coating to new pipes, and which, moreover, allows to recover the protective coating in situ, both on already installed pipes and, in particular, on old pipes which must be recovered.

More specifically, the method according to the present invention allows to use materials of very good protective capability, materials which are sent to the installation place in a pre-packaged or pre-metered condition, and which do not require any subsequent handling operations, materials the production of which, being made and controlled in the shop, assures a constant quality of the protecting material and, finally, materials which can be applied under any environment and moisture conditions, as well as any temperature conditions, without changing the final properties of the made protective coating.

Moreover, owing to the method of the present invention, which can be carried out by using very simple apparatus, which can be serviced in a very easy way, there are obtained very low power consumes, a very high production yield with consequent high operation speed in recovering old pipes or ducts, and with a consequent reduction of the dead time, as well as providing high mechanical and impact resistance characteristics of the coating, which are due, in addition to the specific polymer which is used, to the reinforcement provided by the fabric fibres.

According to one aspect of the present invention the above mentioned aim and objects, as well as yet other objects, which will become more apparent hereinafter, are achieved by a method for applying a protecting coating on carbon steel pipes to protect said pipes against chemical corrosion, characterized in that said method comprises the step of: applying on the sanded outer surface of the pipe a liquid adhesive primer, wrapping the pipe by a ribbon, which has been pre-impregnated by a photopolymerizable prepolymer and, finally, irradiating the wrapped pipe, by lamps emitting light in the visible and/or ultraviolet region, so as to cause the ribbon to be polymerized or cured in order to provide said protective coating.

## DESCRIPTION OF THE PREFERRED EMBODIMENTS

Further characteristics and advantages of the invention will become more apparent hereinafter from the following detailed disclosure of the subject method for coating carbon steel pipes or ducts.

The method according to the present invention substantially comprises a preliminary step of applying, on the sanded steel material, a layer of a suitable liquid adhesive primer, preferably without solvents and having a long processability time, by means of spraying, a brush, a roller or other suitable application methods, so as to obtain a thickness varying from 500 to 100 $\mu$m, depending on the roughness of the surface to be coated, and on the desired final protection degree.

The adhesive primer must preferably be of a solvent free type, it must be liquid and curable at room temperature, and so formulated as to be easily applied to provide the desired thickness in a single application step.

The room temperature curing can be obtained, if in the formulation there are used reactive prepolymers and monomers, by means of which it is possible to prepare bi-component formulations or compositions to be admixed before use, or photopolymerizable prepolymers and monomers.

If the adhesive primer is of a reactive bi-component type, then its polymer component and possible monomers are based on an epoxydic or polyurethane, or acrylic resin, or on an unsaturated polyester or vinylester.

If the adhesive primer is of a photopolymerizable or photo-curable type, then its polymeric component and possible monomers will be based on an epoxydic or acrylate-epoxydic or polyurethane-acrylate, or acrylic resin, or on an unsaturated polyester, or a vinylester, and the curing reaction will be started, under radiation, by suitable photo-starting agents.

In both cases, the epoxide based adhesive primers should be preferred, because of their known very good characteristics of adhesion, chemical resistance or strength, their resistance under several room conditions, during the application, and owing to the low risk for the health of the operators provided by the epoxyde resins.

The bi-component epoxyde adhesive primer uses, as reaction partners of the epoxyde resin, the known cold curable components of the epoxyde resins: aliphatic amines, cycloaliphatic amines, aromatic amines, polyaminoamides and the adducts of all of the above mentioned four curing material classes.

The photopolymerizable epoxyde adhesive primer can also be based on epoxyde resins, the molecular structure of which has not been modified, by causing the epoxyde groups or acrylate epoxyde resin to react, depending on the specific resins being selected and on the photostating agent adapted to start the photopolymerization, either cationically or through a radical starting method.

For the formulation of the adhesive primer, however, can also be used resins of the acrylic, polyurethane, acrylatepolyurethane unsaturated polyester, vinylester type, if particular results must be obtained, such as, for example, a reduction of the production cost.

The bi-component adhesive primers can be either clear or colored; a white color will favour the reflection of the radiated light as, after having wrapped the pipe in a pre-impregnated ribbon, the latter is cured under light: thus, by impregnating a primer by a method as above disclosed, the pipe is taped or wrapped by a fabric material ribbon, or by a non-woven fabric material ribbon, as pre-impregnated with a prepolymer based system, which can be polymerized or cured in few minutes, by radiation or light radiation having a suitable wave length range, in the UV and/or visible region.

More specifically, the pre-impregnated material comprises a fabric material and/or a nonwoven fabric material, made of organic and/or inorganic fibres, permeable to light, and a photopolymerizable prepolymer.

The fabric material is selected with a wave and a weight, for unit of surface, depending on the thickness and desired mechanical characteristics for the outer coating or protecting sheath to be made; the selection of the wave, the unitary weight as well as the fabric fibre is, accordingly, made based on design methods and procedures which are well known in the field of the pre-impregnated materials.

The binding agent for the pre-impregnated material comprises a photopolymerizable free resin, of an epoxyde or acrylic, or acrylate-epoxyde or acrylate polyurethane, or unsaturated polyester or vinylester type, and further comprising possible photopolymerizable or photocurable monomers, plasticizing agents, thermoplastic film forming materials, preferably of a vinyl type, for controlling the adhesion characteristics of the pre-impregnated material, and a suitable photostarting agent, which is selected depending on the available radiating type, and which can be either of a radical or cationic curing type, depending on the type of the prepolymer material contained in the pre-impregnated material.

More specifically, the pre-impregnated material is made in a specialized shop, by using an impregnating apparatus, by means of which it is possible to control the thickness and the resin/fabric ratio.

The thus made pre-impregnated material or ribbon is wound in rolls, which must be protected against the sun light, for example by means of a black polyethylene film; thus packaged, the pre-impregnated material will be stable for a very long time, under all the possible room conditions.

By suitably selecting the photo-starting agent, the pre-imprengated ribbon material, which is not protected by an opaque film, will be stable for several days, even in an environment which is illuminated by an indirect sun light.

In some cases, because of its easy making characteristics, the pre-impregnation step can also be carried out in situ, by providing a pre-impregnating station on the field or place in which the coating must be made.

After having applied the photopolymerizable or photocurable impregnated layer, the encompassed or wrapped pipe is irradiated by a light having a suitable wave length, and generated by suitable lamps.

This radiation will cause the photopolymer to be cured in few minutes, thereby providing a hard and resistant layer or "bark" which will allow the pipe, upon radiation, to be easily handled and installed.

The underlaying adhesive primer, as it is of a reactive bicomponent type, even if it is not yet polymerized or cured, may continue its slow polymerization or curing reaction, as protected by the outer layer, or "bark" of the overlaying composite material, obtained from the cured pre-impregnated material, so as to provide a perfectly compact system, which structurally connects the steel to the outer coating or "bark".

In order to carry out the curing or polymerization operation, there is used an apparatus which essentially comprises a cylindric support, in which can be housed lamps for emitting light provided for curing the pre-impregnated or pre-preg material.

The diameter of this support will be selected depending on the diameter of the pipe to be coated, the size of the lamps and the surface of the pre-impregnated material; in turn, this distance will depend on the power of the selected lamps.

The length of the cylindric support, in turn, will depend on the reactivity of the photopolymer contained in the pre-impregnated material and on the desired coating speed: for example, if the pre-impregnated ribbon material cures within three minutes, and it is desired a feeding speed of 1 metre/minute, then the support should have a length of three meters.

For a better understanding of the subject method, some examples thereof will be disclosed hereinbelow.

## Example 1

On a carbon steel pipe, sanded to at least a degree Sa 2.1/2 (Svenks standard SIS 05 59 00), having a roughness of 40-50 micron, there is applied a bi-component epoxydic primer, based on a bisphenol epoxydic resin, having an epoxyde equivalent of about 200 (DGEBA) and an adduct of tri-ethylentetramine (TETA), to a thickness of about 200 microns. The adhesive is formulated so that it may be airless sprayed to a thickness greater than 200 microns in the vertical direction, without tears. The application can be performed by using the following indicative formulation:

| PART A | |
|---|---|
| Epoxydic resin (DGEBA) | 82 parts by weight |
| Dibutylphtalate (DBF) | 10 parts by weight |
| Silica gel | 8 parts by weight |
| | 100 parts by weight |

| PART B | |
|---|---|
| Adduct in TETA with propyleneoxyde | 20 parts by weight |

After having applied the primer, the pipe is wrapped or taped by a pre-impregnated ribbon material consisting of:

- A glass fabric, having a weight of about 300 $g/m^2$

- A binding substance, based on the reaction product of a liquid bisphenolepoxydic resin (DGEBA) and metacrylic acid, diluted by 25% of diacrylatetripropylenoxide, modified by polyvinylformal and activated by 2,2 dimetoxy-1,2 diphenylethane-1-one as a photo-starting agent.

After the taping, the assembly is radiated for three minutes by 300 watt lamp, the radiation of which, similar to the sun radiation, is produced by a high pressure quartz mercury discharge tube, and by an incandescent filament made of tungsten. The lamp is arranged at a distance of 15 cm from the surface of the coating; the radiation will cover a circular area having a diameter of 30 cm; the number of lamps and the positions thereof are defined based on the surface of the pre-impregnated material which must be cured in a time unit.

The thus obtained "bark" has the following characteristics:

| Compression resistance | 250-300 $N/mm^2$ |
|---|---|
| Resistance to tensile stress | 300-350 $N/mm^2$ |
| Bending resistance | 350-400 $N/mm^2$ |
| Impact bending resistance | 90-120 $N/mm^2$ |

After a week at 20°C, the adhesion of the steel of the finished coating is greater than 15 $N/mm^2$.

Example 2

On a carbon steel pipe, sanded at least to the standard Sa 2.1/2 (Svenks Standard SIS 05 59 00), having a roughness of 40-50 micron is applied a bi-component epoxydic primer, based on a bisphenol-epoxydic resin, having an epoxyde equivalent of about 200 (DGEBA) and an adduct of 4,4-diamine-diphenyl-methane (DDM) to a thickness of about 400 microns. The adhesive is formulated so that can be airless sprayed to a thickness greater than 400 microns in a vertical direction, without tears. The application can be made with the following not limitative formulation:

| PART A | |
|---|---|
| Epoxydic resin (DGEBA) | 83 parts by weight |
| Dibutylphtalate | 10 parts by weight |
| Silicagel | 8 parts by weight |
| | 100 parts by weight |

| PART B | |
|---|---|
| Adduct of DDM with DGEBA plasticized with DBF | 50 parts by weight |

After having applied the primer, there is followed the procedure of the Example 1; the application step and characteristics of the "bark" are the same.

After a week at 20°C, the adhesion to the steel of the finished coating is greater than 12 N/mm$^2$.

Example 3

On a carbon steel pipe, sanded to a standard degree of SA 2.1/2 (Svensk Standard SIS 05 59 00), with a roughness of 40-50 μm, there is applied a photopolymerizable single component epoxydic primer based on an acrylate bisphenolepoxydic resin, diluted by tripropylenglycoldiacrylate and activated by a suitable photostarting agent, to a thickness of about 200 μm. The adhesive is formulated so that it can be airless sprayed to a thickness greater than 200 μm in a vertical direction, without tears. The application can be performed with the following not limitative formulation:

| Acrylate epoxydic resin | 71 parts by weight |
|---|---|
| Diacrylatetripropylenglycol | 20 parts by weith |
| Photostarting agent | 1 part by weight |
| Silicagel | 8 parts by weight |
| | 100 parts by weight |

After having applied the primer, there is following the same procedure as that of the Example 1; the application step and the characteristics of the "bark" are the same.

After an hour from the application of the radiation, the adhesion of the steel of the finished coating is greater than 10 N/mm$^2$.

Example 4

There is applied an adhesive primer of the type of the Example 1 and in the same manner.

Then, the pipe is taped by a pre-impregnated ribbon material comprising:

- A polyester not woven fabric of a weight of about 200 g/m$^2$,
- An unsaturated polyester resin diluted by styrene, modified by a thermoplastic vinyl resin and activated by 2,2-dimethoxy-1,2-diphenylethane-1-one as a photo-starting agent.

After the taping, there is performed a radiation step by the same procedure disclosed in the Example 1.

The thus obtained "bark" has the following characteristics:

| Compression resistance | 70-80 N/mm$^2$ |
|---|---|
| Resistance to tensile stress | 30-40 N/mm$^2$ |
| Bending resistance | 60-70 N/mm$^2$ |

The adhesione to the steel of the finished coating is the same as that of the Example 1.

From the above disclosure it should be apparent that the invention fully achieves the intended objects.

In particular the fact is to be pointed out that a method has been provided which can be indifferently carried out in a shop or on the field, and which can be used both for new pipes and on already installed pipes, thereby providing very high yield characteristics as well as very good mechanical strength properties.

## Claims

1. A method for applying a protective coating on carbon steel pipes to protect said pipes against chemical corrosion, characterized in that said method comprises the steps of: applying on the sanded outer surface of the pipe a liquid adhesive primer, wrapping the pipe by a ribbon, which has been pre-impregnated by a photopolymerizable prepolymer and, finally, irradiating the wrapped pipe by lamps emitting light in the visible and/or ultraviolet region, so as to cause the ribbon to be polymerized or cured to provide said protective coating.

2. A method according to Claim 1, characterized in that said primer is applied by spraying, by a brush, a roller, a spatula or by means of any other suitable application methods.

3. A method according to Claims 1 and 2, characterized in that said adhesive primer is applied to a thickness between 50 to 1000 μm, depending on the roughness of the surface of the pipe.

4. A method according to any preceding claims, characterized in that said adhesive primer comprises a photopolymerizable prepolymer which can be photochemically cured simultaneously with the pre-impregnated material, during the radiating step.

5. A method according to one or more of the preceding claims, characterized in that said primer comprises a resin material which can be slowly chemically cured, after the photopolymerization of the pre-impregnated material.

6. A method according to one or more of the preceding claims, characterized in that the primer photopolymerizable prepolymer is of a cationic curing epoxydic type or of a radical curable acrylate epoxydic type.

7. A method according to one or more of the preceding claims, characterized in that said primer, comprising a reactive bi-component formulation, includes an epoxydic polymer and an amine curing agent.

8. A method according to one or more of the preceding claims, characterized in that said ribbon comprises a fabric material, or a non-woven fabric material, obtained from glass fibres and/or either natural or artificial fibres, which are permeable to the irradiated light.

9. A method according to one or more of the preceding claims, characterized in that the prepolymer of the pre-impregnated ribbon material is of an epoxydic type, or of an acrylate epoxydic type, or of an acrylate polyurethane type, or of an acrylic type, or of an unsaturated polyester or vinylester type, and being moreover provided a photo-starting agent, of a cationic or radical type, depending on the used prepolymer and on the type of the light emitted by the photopolymerization lamps.

10. A method according to one or more of the preceding claims, characterized in that said pre-impregnated ribbon has a thickness from 0.2 to 0.4 mm, depending on the desired protection degree.

**Patentansprüche**

1. Ein Verfahren, um eine Schutzschicht auf Rohre aus Kohlenstoffstahl zum Schutz dieser Rohre gegen Korrosion durch Chemikalien aufzubringen, dadurch gekennzeichnet, daß dieses Verfahren folgende Schritte umfaßt: Auftragen auf der sandgestrahlten, äußeren Oberfläche des Rohres eines flüssigen Klebstoffprimers, Einwickeln des Rohres mit einem Streifen, der mit einem durch Licht polymerisierbaren Polymervorläufer vorgetränkt wurde, und schließlich Bestrahlen des eingewickelten Rohres mit Lampen, die Licht im sichtbaren und/oder ultravioletten Bereich abstrahlen, um diesen Streifen polymerisieren oder aushärten zu lassen und diese Schutzbeschichtung bereitzustellen.

2. Ein Verfahren nach Anspruch 1, dadurch gekennzeichnet, daß dieser Primer durch Spritzen, mit einer Bürste, einer Walze, einem Spachtel oder mittels eines beliebigen, dazu geeigneten Auftrageverfahrens aufgetragen wird.

3. Ein Verfahren nach Anspruch 1 und 2, dadurch gekennzeichnet, daß dieser Klebstoffprimer in einer Stärke zwischen 50 und 1000 µm je nach der Rauhheit der Oberfläche des Rohres aufgetragen wird.

4. Ein Verfahren nach irgendeinem der vorhergehenden Ansprüche, dadurch gekennzeichnet, daß dieser Klebstoffprimer einen durch Licht polymerisierbaren Polymervorläufer umfaßt, der während des Schritts der Bestrahlung gleichzeitig mit dem vorgetränkten Material photochemisch ausgehärtet werden kann.

5. Ein Verfahren nach einem oder mehreren der vorhergehenden Ansprüche, dadurch gekennzeichnet, daß dieser Primer ein Kunstharz umfaßt, das nach der Photopolymerisation des vorgetränkten Materials langsam chemisch ausgehärtet werden kann.

6. Ein Verfahren nach einem oder mehreren der vorhergehenden Ansprüche, dadurch gekennzeichnet, daß der durch Licht polymerisierbare Polymervorläufer des Primers eines kationisch aushärtenden Epoxydtyps oder eines radikalisch aushärtenden Acrylat-Epoxidtyps ist.

7. Ein Verfahren nach einem oder mehreren der vorhergehenden Ansprüche, dadurch gekennzeichnet, daß dieser Primer, der eine reaktive Zweikomponenten-Formulierung umfaßt, aus einem Epoxydpolymer und einem Aminhärter besteht.

8. Ein Verfahren nach einem oder mehreren der vorhergehenden Ansprüche, dadurch gekennzeichnet, daß dieser Streifen ein Gewebe oder einen Vliesstoff umfaßt, die aus Glasfasern und/oder natürlichen oder künstlichen Fasern bestehen, die für das abgestrahlte Licht durchlässig sind.

9. Ein Verfahren nach einem oder mehreren der vorhergehenden Ansprüche, dadurch gekennzeichnet, daß der Polymervorläufer des vorgetränkten Materials des Streifens ein epoxidischer oder ein acrylat-epoxidischer oder ein acrylat-polyurethanischer oder ein acrylischer oder ein ungesättigter Polyester oder Vinylester ist, und daß ferner, je nach dem verwendeten Polymervorläufer und der Lichtart, die von den Lampen zur Photopolymerisation abgestrahlt wird, ein kationischer oder radikalischer Photoinitiator bereitgestellt ist.

10. Ein Verfahren nach einem oder mehreren der vorhergehenden Ansprüche, dadurch gekennzeichnet, daß dieser vorgetränkte Streifen eine Dicke von 0.2 bis 0.4 mm besitzt, je nach dem gewünschten Schutzgrad.

**Revendications**

1. Procédé pour appliquer un revêtement protecteur sur des tubes en acier au carbone afin de protéger lesdits tubes contre la corrosion chimique, caractérisé en ce que ledit procédé comporte les étapes suivantes : l'application sur la surface extérieure poncée du tube d'un mastic adhésif liquide, l'enveloppement du tube par un ruban qui a été préimprégné par un prépolymère photopolymérisable et enfin, l'irradiation du tube enveloppé par des lampes qui émettent de la lumière dans la zone visible et/ou ultraviolette, de façon à provoquer la polymérisation ou la réticulation du ruban afin de fournir ledit revêtement protecteur.

2. Procédé selon la revendication 1, caractérisé en ce que ledit mastic s'applique par pulvérisation, à l'aide d'une brosse, d'un rouleau, d'une spatule ou au moyen de tout autre procédé d'application approprié.

3. Procédé selon les revendications 1 et 2, caractérisé en ce que ledit mastic s'applique avec une épaisseur entre 50

et 1000 μm, selon la rugosité de la surface du tube.

4.  Procédé selon une des revendications précédantes, caractérisé en ce que ledit mastic adhésif comporte un prépolymére photopolymérisable qui peut faire l'objet d'une réticulation photochimique simultanément avec la matière préimprégnée. pendant l'étape de l'irradiation.

5.  Procédé selon une ou plusieurs des revendications précédantes, caractérisé en ce que ledit mastic comporte une résine qui peut faire l'objet d'une réticulation chimique lente, après la photopolymérisation de la matière préimprégnée.

6.  Procédé selon une ou plusieurs des revendications précédantes, caractérisé en ce que le prépolymère photopolymérisable du mastic est du type époxydique à réticulation cationique ou du type acrylate époxydique réticulable par radical.

7.  Procédé selon une ou plusieurs des revendications précédantes caractérisé en ce que ledit mastic, comprenant une formulation bicomposante réactive, comporte un polymère époxydique ainsi qu'un agent de réticulation aminé.

8.  Procédé selon une ou plusieurs des revendications précédantes, caractérisé en ce que ledit ruban comporte un tissu ou un tissu non-tissé, obtenu à partir de fibres de verte et/ou soit des fibres naturelles, soit des fibres artificielles, qui sont perméables à la lumière de l'irradiation.

9.  Procédé selon une ou plusieurs des revendications précédantes, caractérisé en ce que le prépolymère du ruban préimprégné est du type époxydique, ou du type acrylate époxydique ou du type acrylate de polyuréthane ou du type acrylique, ou du type à base de polyester saturé ou d'ester vinylique, et en ce qu'il est par ailleurs pourvu d'un agent photoinitiateur, de type cationique ou radical, selon le prépolymère utilisé et selon le type de lumière émise par les lampes de photopolymérisation.

10. Procédé selon une ou plusieurs des revendications précédantes, caractérisé en ce que ledit ruban préimprégné a une épaisseur qui varie entre 0,2 et 0,4 mm, selon le degré de protection désiré.